(19) Europäisches Patentamt
European Patent Office
Office européen des brevets

(11) **EP 4 322 439 A1**

(12) **EUROPEAN PATENT APPLICATION**
published in accordance with Art. 153(4) EPC

(43) Date of publication:
**14.02.2024 Bulletin 2024/07**

(21) Application number: **22784961.9**

(22) Date of filing: **06.04.2022**

(51) International Patent Classification (IPC):
**H04L 1/18** (2023.01)  **H04L 5/00** (2006.01)
**H04L 1/08** (2006.01)  **H04W 4/40** (2018.01)

(52) Cooperative Patent Classification (CPC):
**H04L 1/08; H04L 1/18; H04L 5/00; H04W 4/40**

(86) International application number:
**PCT/KR2022/004969**

(87) International publication number:
**WO 2022/216052 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.04.2021 US 202163171567 P**

(71) Applicant: **LG Electronics Inc.
Yeongdeungpo-gu
Seoul 07336 (KR)**

(72) Inventors:
• **LEE, Seungmin
Seoul 06772 (KR)**
• **SEO, Hanbyul
Seoul 06772 (KR)**

(74) Representative: **Plasseraud IP
66, rue de la Chaussée d'Antin
75440 Paris Cedex 09 (FR)**

(54) **METHOD AND DEVICE FOR PERFORMING COMMUNICATION ON BASIS OF HARQ FEEDBACK IN NR V2X**

(57)     Provided are a method for a first device performing wireless communication, and a device supporting same. The method comprises the steps of: performing physical sidelink control channel (PSCCH) transmission N number of times; performing physical sidelink shared channel (PSSCH) transmission, related to the N number of PSCCH transmissions, N number of times; determining N number of physical sidelink feedback channel (PSFCH) resources related to the N number of PSSCH transmissions; and performing monitoring for receiving a PSFCH on N-K number of PSFCH resources among the N number of PSFCH resources, wherein the monitoring for receiving the PSFCH is skipped on the K number of PSFCH resources among the N number of PSFCH resources, where N and K may be positive integers.

FIG. 13

- performing N PSCCH transmissions — S1310
- performing N PSSCH transmissions related to N PSCCH transmissions — S1320
- determining N PSFCH resources related to N PSSCH transmissions — S1330
- performing monitoring for PSFCH reception on N-K PSFCH resources among N PSFCH resources — S1340

EP 4 322 439 A1

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

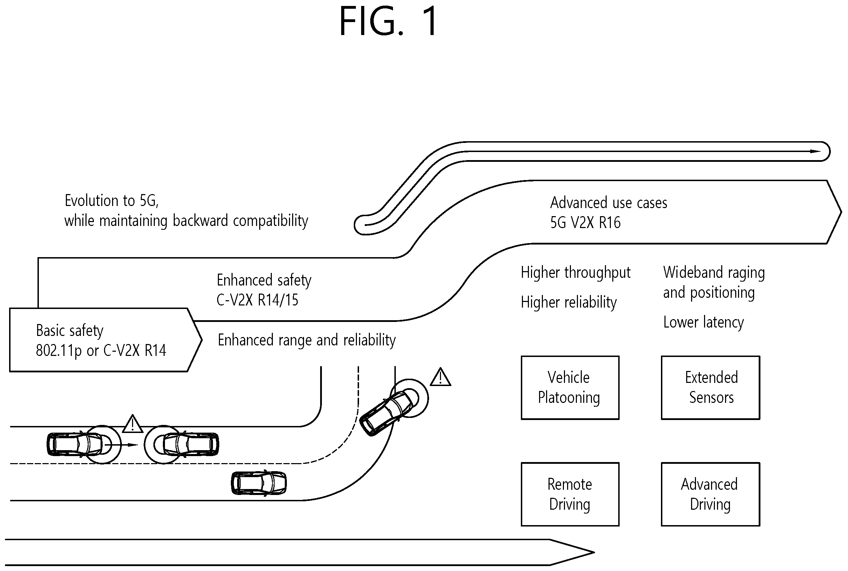

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

Thereafter, regarding V2X communication, various V2X scenarios are proposed in NR. For example, the various V2X scenarios may include vehicle platooning, advanced driving, extended sensors, remote driving, or the like.

### DISCLOSURE

### TECHNICAL PROBLEM

Meanwhile, if the NACK ONLY feedback method (e.g., if the RX UE fails to decode a MAC PDU transmitted by the TX UE, the RX UE may feedback NACK information, and on the other hand, if the RX UE succeeds in decoding a MAC PDU, the RX UE may not transmit ACK information) is applied, a performance degradation problem may occur due to a HALF DUPLEX problem related to the reception of the MAC PDU (associated SCI) of the RX UE. For example, if the RX UE fails to receive data transmitted by the TX UE due to the HALF DUPLEX problem, the RX UE may not be able to transmit HARQ feedback to the TX UE. In this case, the TX UE that does not receive HARQ feedback from the RX UE may determine that the RX UE has successfully received the data, and the TX UE may not perform retransmission. As a result, the reliability of the SL communication may not be guaranteed.

### TECHNICAL SOLUTION

In an embodiment, a method for performing wireless communication by a first device may be provided. The method may comprise: performing N physical sidelink control channel (PSCCH) transmissions; performing N physical sidelink shared channel (PSSCH) transmissions related to the N PSCCH transmissions; determining N physical sidelink feedback channel (PSFCH) resources related to the N PSSCH transmissions; and performing monitoring for PSFCH reception on N-K PSFCH resources among the N PSFCH resources, wherein the monitoring for the PSFCH reception is skipped on K PSFCH resources among the N PSFCH resources, and wherein the N and the K are positive integers.

In an embodiment, a first device adapted to perform wireless communication may be provided. The first device may comprise: one or more memories storing instructions; one or more transceivers; and one or more processors connected to the one or more memories and the one or more transceivers. For example, the one or more processors may execute the instructions to: perform N physical sidelink control channel (PSCCH) transmissions; perform N physical sidelink shared channel (PSSCH) transmissions related to the N PSCCH transmissions; determine N physical sidelink feedback channel (PSFCH) resources related to the N PSSCH transmissions; and perform monitoring for PSFCH reception on N-K PSFCH resources among the N PSFCH resources, wherein the monitoring for the PSFCH reception is skipped on K PSFCH resources among the N PSFCH resources, and wherein the N and the K are positive integers.

## ADVANTAGEOUS EFFECTS

The UE can perform SL communication efficiently.

## BRIEF DESCRIPTION OF THE DRAWINGS

FIG. 1 is a drawing for describing V2X communication based on NR, compared to V2X communication based on RAT used before NR.
FIG. 2 shows a structure of an NR system, based on an embodiment of the present disclosure.
FIG. 3 shows a radio protocol architecture, based on an embodiment of the present disclosure.
FIG. 4 shows a structure of a radio frame of an NR, based on an embodiment of the present disclosure.
FIG. 5 shows a structure of a slot of an NR frame, based on an embodiment of the present disclosure.
FIG. 6 shows an example of a BWP, based on an embodiment of the present disclosure.
FIG. 7 shows a UE performing V2X or SL communication, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIGs. 10 and 11 show a method for a UE to perform PBPS, based on an embodiment of the present disclosure.
FIG. 12 shows a method for a UE to perform CPS, based on an embodiment of the present disclosure.
FIG. 13 shows a method for a first device to perform wireless communication, based on an embodiment of the present disclosure.
FIG. 14 shows a method for a second device to perform wireless communication, based on an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present disclosure may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

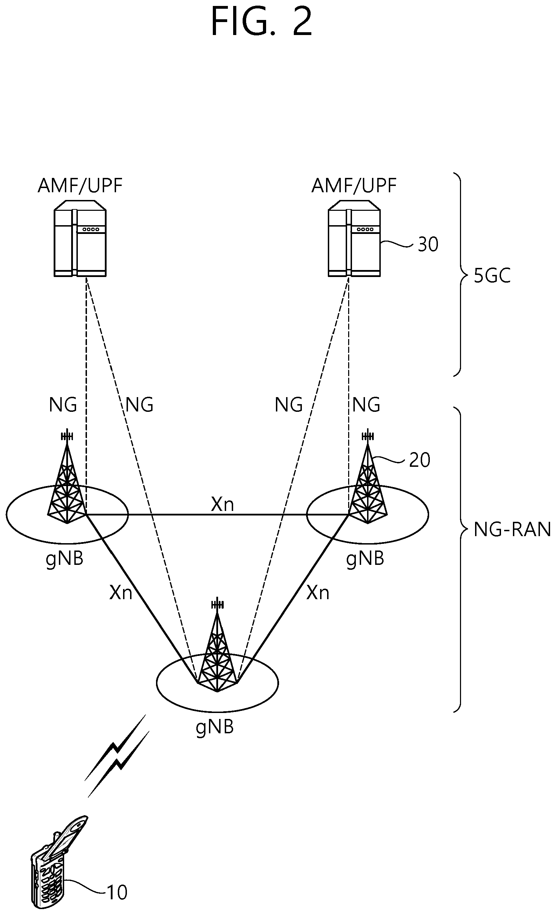

FIG. 2 shows a structure of an NR system, based on an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

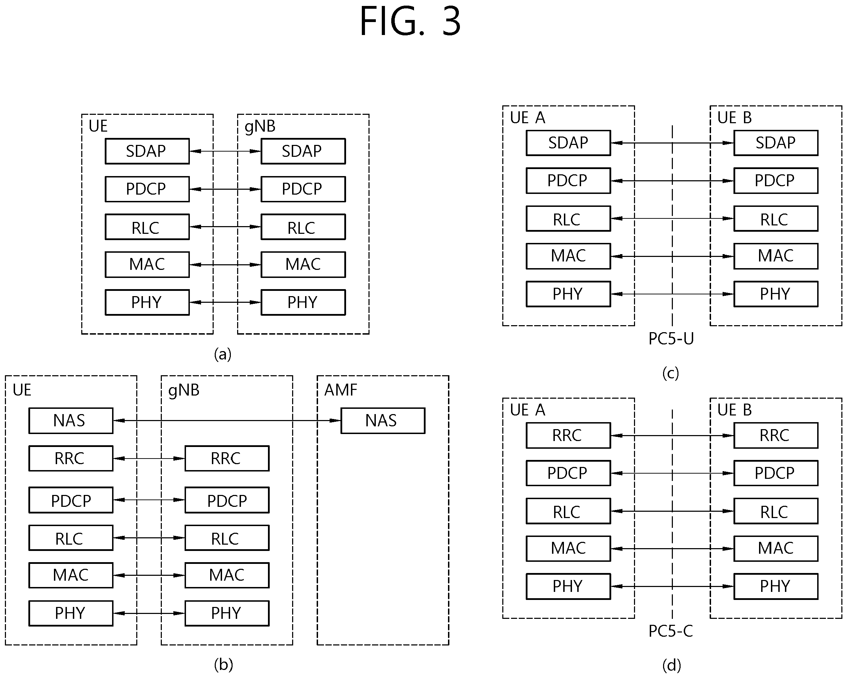

FIG. 3 shows a radio protocol architecture, based on an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication, (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

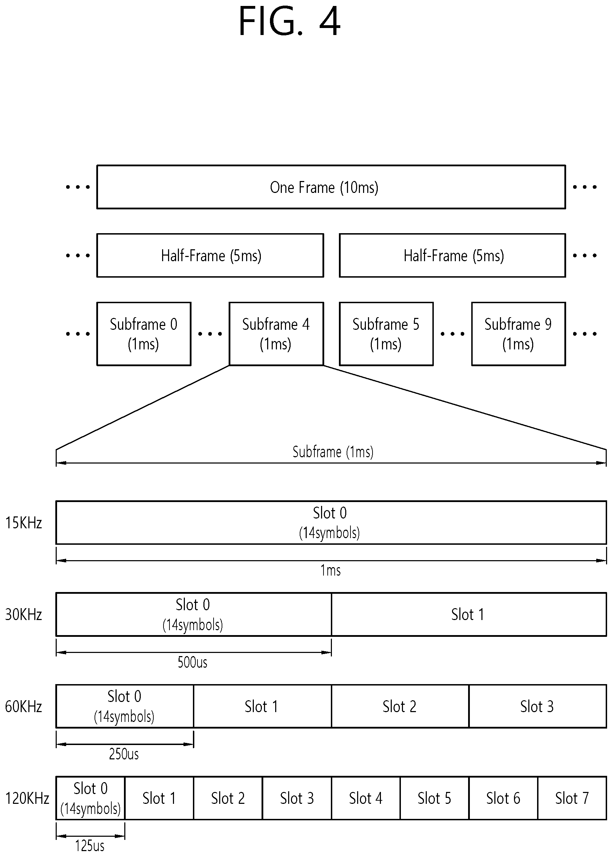

FIG. 4 shows a structure of a radio frame of an NR, based on an embodiment of the present disclosure. The embodiment of FIG. 4 may be combined with various embodiments of the present disclosure.

Referring to FIG. 4, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

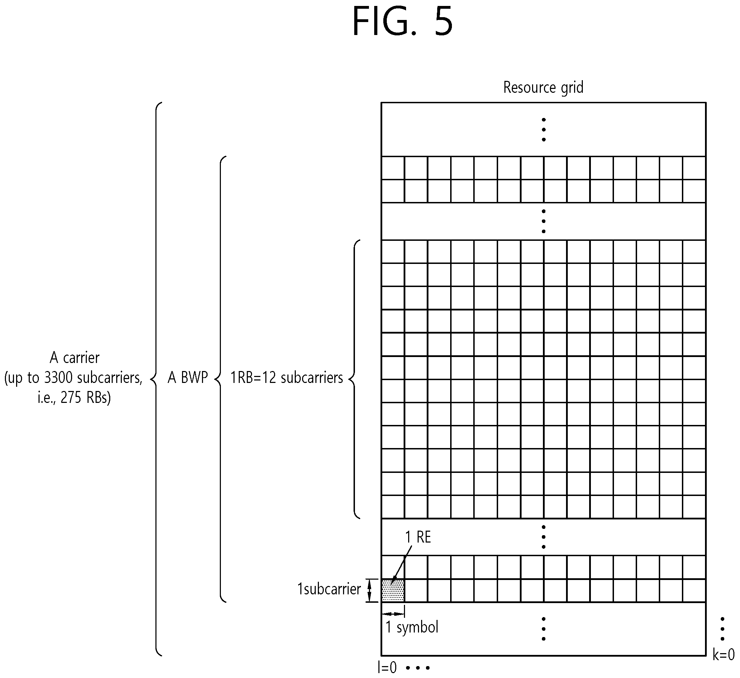

FIG. 5 shows a structure of a slot of an NR frame, based on an embodiment of the present disclosure. The embodiment of FIG. 5 may be combined with various embodiments of the present disclosure.

Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

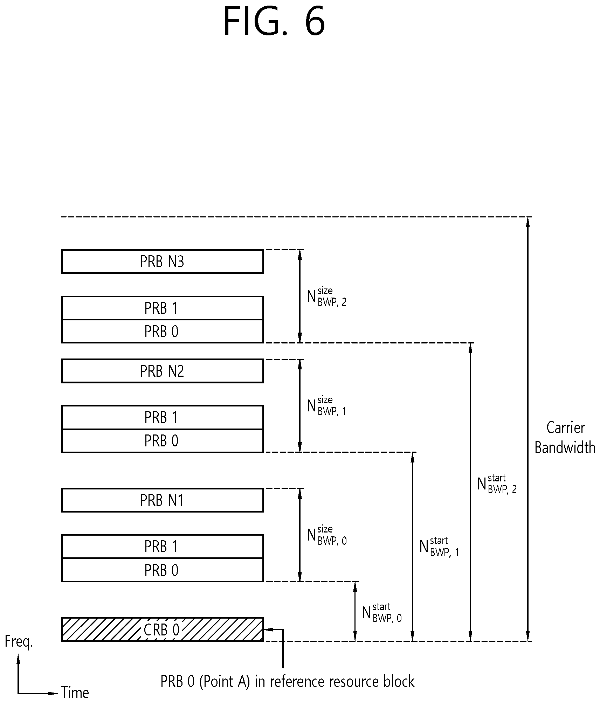

FIG. 6 shows an example of a BWP, based on an embodiment of the present disclosure. The embodiment of FIG. 6 may be combined with various embodiments of the present disclosure. It is assumed in the embodiment of FIG. 6 that the number of BWPs is 3.

Referring to FIG. 6, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

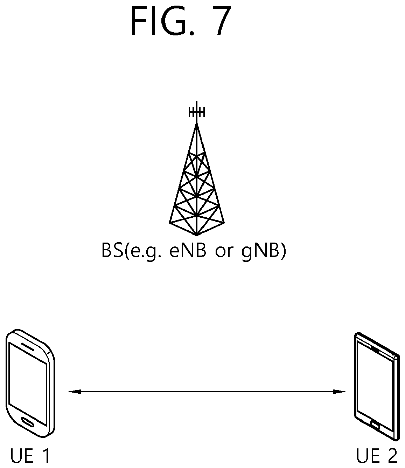

FIG. 7 shows a UE performing V2X or SL communication, based on an embodiment of the present disclosure. The embodiment of FIG. 7 may be combined with various embodiments of the present disclosure.

Referring to FIG. 7, in V2X or SL communication, the term 'UE' may generally imply a UE of a user. However, if network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Hereinafter, resource allocation in SL will be described.

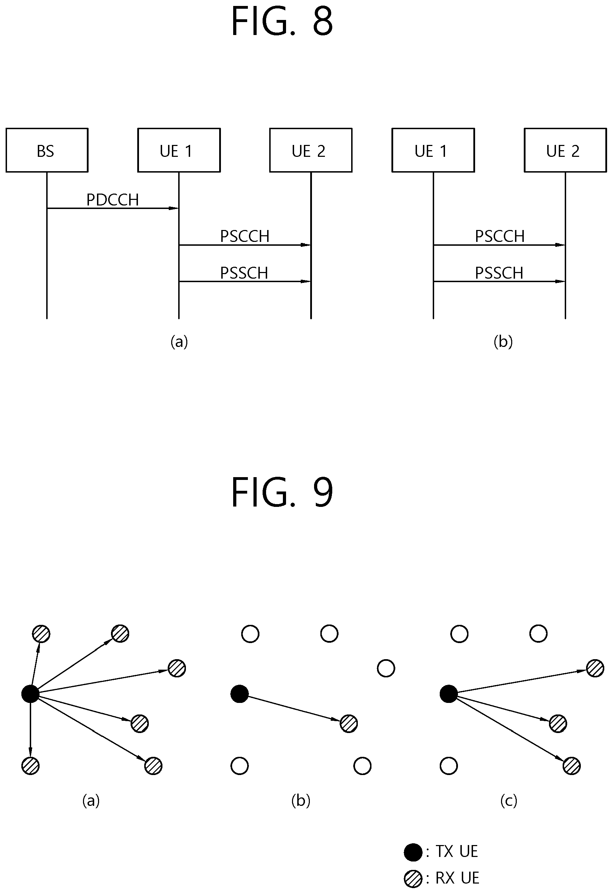

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a BS may schedule an SL resource to be used by the UE for SL transmission. For example, the BS may perform resource scheduling to a UE 1 through a PDCCH (e.g., downlink control information (DCI)) or RRC signaling (e.g., Configured Grant Type 1 or Configured Grant Type 2), and the UE 1 may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to (b) of FIG. 8, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the UE 2 through a PSCCH, and thereafter may transmit data based on the SCI to the UE 2 through a PSSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

In case of SL unicast and groupcast, HARQ feedback and HARQ combining in the physical layer may be supported. For example, when a receiving UE operates in a resource allocation mode 1 or 2, the receiving UE may receive the PSSCH from a transmitting UE, and the receiving UE may transmit HARQ feedback for the PSSCH to the transmitting UE by using a sidelink feedback control information (SFCI) format through a physical sidelink feedback channel (PSFCH).

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

For example, when the SL HARQ feedback is enabled for groupcast, the receiving UE may determine whether to transmit the HARQ feedback to the transmitting UE based on a transmission-reception (TX-RX) distance and/or Reference Signal Received Power (RSRP).

For example, in the groupcast option 1, in case of the TX-RX distance-based HARQ feedback, if the TX-RX distance is less than or equal to a communication range requirement, the receiving UE may transmit HARQ feedback for the PSSCH to the transmitting UE. Otherwise, if the TX-RX distance is greater than the communication range requirement, the receiving UE may not transmit the HARQ feedback for the PSSCH to the transmitting UE. For example, the transmitting UE may inform the receiving UE of a location of the transmitting UE through SCI related to the PSSCH. For example, the SCI related to the PSSCH may be second SCI. For example, the receiving UE may estimate or obtain the TX-RX distance based on a location of the receiving UE and the location of the transmitting UE. For example, the receiving UE may decode the SCI related to the PSSCH and thus may know the communication range requirement used in the PSSCH.

For example, in case of the resource allocation mode 1, a time (offset) between the PSFCH and the PSSCH may be configured or pre-configured. In case of unicast and groupcast, if retransmission is necessary on SL, this may be indicated to a BS by an in-coverage UE which uses the PUCCH. The transmitting UE may transmit an indication to a serving BS of the transmitting UE in a form of scheduling request (SR)/buffer status report (BSR), not a form of HARQ ACK/NACK. In addition, even if the BS does not receive the indication, the BS may schedule an SL retransmission resource to the UE. For example, in case of the resource allocation mode 2, a time (offset) between the PSFCH and the PSSCH may be configured or pre-configured.

For example, from a perspective of UE transmission in a carrier, TDM between the PSCCH/PSSCH and the PSFCH may be allowed for a PSFCH format for SL in a slot. For example, a sequence-based PSFCH format having a single symbol may be supported. Herein, the single symbol may not an AGC duration. For example, the sequence-based PSFCH format may be applied to unicast and groupcast.

For example, in a slot related to a resource pool, a PSFCH resource may be configured periodically as N slot durations, or may be pre-configured. For example, N may be configured as one or more values greater than or equal to 1. For example, N may be 1, 2, or 4. For example, HARQ feedback for transmission in a specific resource pool may be transmitted only through a PSFCH on the specific resource pool.

For example, if the transmitting UE transmits the PSSCH to the receiving UE across a slot #X to a slot #N, the receiving UE may transmit HARQ feedback for the PSSCH to the transmitting UE in a slot #(N+A). For example, the slot #(N+A) may include a PSFCH resource. Herein, for example, A may be a smallest integer greater than or equal to K. For example, K may be the number of logical slots. In this case, K may be the number of slots in a resource pool. Alternatively, for example, K may be the number of physical slots. In this case, K may be the number of slots inside or outside the resource pool.

For example, if the receiving UE transmits HARQ feedback on a PSFCH resource in response to one PSSCH transmitted by the transmitting UE to the receiving UE, the receiving UE may determine a frequency domain and/or code domain of the PSFCH resource based on an implicit mechanism in a configured resource pool. For example, the receiving UE may determine the frequency domain and/or code domain of the PSFCH resource, based on at least one of a slot index related to PSCCH/PSSCH/PSFCH, a sub-channel related to PSCCH/PSSCH, and/or an identifier for identifying each receiving UE in a group for HARQ feedback based on the groupcast option 2. Additionally/alternatively, for example, the receiving UE may determine the frequency domain and/or code domain of the PSFCH resource, based on at least one of SL RSRP, SINR, L1 source ID, and/or location information.

For example, if HARQ feedback transmission through the PSFCH of the UE and HARQ feedback reception through the PSFCH overlap, the UE may select any one of HARQ feedback transmission through the PSFCH and HARQ feedback reception through the PSFCH based on a priority rule. For example, the priority rule may be based on at least priority indication of the related PSCCH/PSSCH.

For example, if HARQ feedback transmission of a UE through a PSFCH for a plurality of UEs overlaps, the UE may select specific HARQ feedback transmission based on the priority rule. For example, the priority rule may be based on at least priority indication of the related PSCCH/PSSCH.

Meanwhile, in the present disclosure, a transmitting UE (i.e., TX UE) may be a UE which transmits data to a (target) receiving UE (i.e., RX UE). For example, the TX UE may be a UE which performs PSCCH transmission and/or PSSCH transmission. For example, the TX UE may be a UE which transmits SL CSI-RS(s) and/or a SL CSI report request indicator to the (target) RX UE. For example, the TX UE may be a UE which transmits (pre-defined) reference signal(s) (e.g., PSSCH demodulation reference signal(s) (DM-RS(s))) and/or a SL (L1) RSRP report request indicator to be used for SL (L1) RSRP measurement to the (target) RX UE(s). For example, the TX UE may be a UE which transmits (control) channel(s) (e.g., PSCCH, PSSCH, etc.) and/or reference signal(s) (e.g., DM-RS(s), CSI-RS(s), etc.) on the (control) channel(s) to be used for a SL radio link monitoring (RLM) operation and/or a SL radio link failure (RLF) operation of the (target) RX UE.

Meanwhile, in the present disclosure, a receiving UE (i.e., RX UE) may be a UE which transmits SL HARQ feedback to a transmitting UE (i.e., TX UE) based on whether decoding of data received from the TX UE is successful and/or whether detection/decoding of a PSCCH (related to PSSCH scheduling) transmitted by the TX UE is successful. For example, the RX UE may be a UE which performs SL CSI transmission to the TX UE based on SL CSI-RS(s) and/or a SL CSI report request indicator received from the TX UE. For example, the RX UE may be a UE which transmits, to the TX UE, a SL (L1) RSRP measurement value measured based on (pre-defined) reference signal(s) and/or a SL (L1) RSRP report request indicator received from the TX UE. For example, the RX UE may be a UE which transmits data of the RX UE to the TX UE. For example, the RX UE may be a UE which performs a SL RLM operation and/or a SL RLF operation based on a (pre-configured) (control) channel and/or reference signal(s) on the (control) channel received from the TX UE.

Meanwhile, in the present disclosure, a TX UE may transmit the entirety or part of information described below to the RX UE through SCI(s). Herein, for example, the TX UE may transmit the entirety or part of the information described below to the RX UE through a first SCI and/or a second SCI.

- PSSCH (and/or PSCCH) related resource allocation information (e.g., the location /number of time/frequency resources, resource reservation information (e.g., period))
- SL CSI report request indicator or SL (L1) RSRP (and/or SL (L1) RSRQ and/or SL (L1) RSSI) report request indicator
- SL CSI transmission indicator (or SL (L1) RSRP (and/or SL (L1) RSRQ and/or SL (L1) RSSI) information transmission indicator)) (on a PSSCH)
- Modulation and coding scheme (MCS) information
- Transmit power information
- L1 destination ID information and/or L1 source ID information
- SL HARQ process ID information
- New data indicator (NDI) information
- Redundancy version (RV) information
- (Transmission traffic/packet related) QoS information (e.g., priority information)
- SL CSI-RS transmission indicator or information on the number of antenna ports for (transmitted) SL CSI-RS
- Location information of the TX UE or location (or distance region) information of the target RX UE (for which SL HARQ feedback is requested)
- Reference signal (e.g., DM-RS, etc.) information related to channel estimation and/or decoding of data to be transmitted through a PSSCH. For example, the reference signal information may be information related to a pattern of a (time-frequency) mapping resource of DM-RS, rank information, antenna port index information, information on the number of antenna ports, etc.

Meanwhile, in the present disclosure, for example, a PSCCH may be replaced/substituted with at least one of a SCI, a first SCI (1st-stage SCI), and/or a second SCI (2nd-stage SCI), or vice versa. For example, a SCI may be replaced/substituted with at least one of a PSCCH, a first SCI, and/or a second SCI, or vice versa. For example, a PSSCH may be replaced/substituted with a second SCI and/or a PSCCH, or vice versa.

Meanwhile, in the present disclosure, for example, if SCI configuration fields are divided into two groups in consideration of a (relatively) high SCI payload size, an SCI including a first SCI configuration field group may be referred to as a first SCI or a 1st SCI, and an SCI including a second SCI configuration field group may be referred to as a second SCI or a 2nd SCI. For example, the 1st SCI and the 2nd SCI may be transmitted through different channels. For example, the transmitting UE may transmit the first SCI to the receiving UE through the PSCCH. For example, the second SCI may be transmitted to the receiving UE through an (independent) PSCCH, or may be transmitted in a piggyback manner together with data through the PSSCH.

Meanwhile, in the present disclosure, for example, "configure/configured" or "define/defined" may refer to being (pre-)configured from a base station or a network. For example, "configure/configured" or "define/defined" may refer to being (pre-)configured for each resource pool from the base station or the network. For example, the base station or the network may transmit information related to "configuration" or "definition" to the UE. For example, the base station or the network may transmit information related to "configuration" or "definition" to the UE through pre-defined signaling. For example, the pre-defined signaling may include at least one of RRC signaling, MAC signaling, PHY signaling, and/or SIB.

Meanwhile, in the present disclosure, for example, "configure/configured" or "define/defined" may refer to being designated or configured through pre-configured signaling between UEs. For example, information related to "configuration" or "definition" may be transmitted or received pre-configured signaling between UEs. For example, the pre-defined signaling may include at least one of RRC signaling, MAC signaling, PHY signaling, and/or SIB.

Meanwhile, in the present disclosure, for example, RLF may be replaced/substituted with out-of-synch (OOS) and/or in-synch (IS), or vice versa.

Meanwhile, in the present disclosure, for example, a resource block (RB) may be replaced/substituted with a subcarrier, or vice versa. For example, a packet or a traffic may be replaced/substituted with a transport block (TB) or a medium access control protocol data unit (MAC PDU) according to a transmission layer, or vice versa. For example, a code block group (CBG) may be replaced/substituted with a TB, or vice versa. For example, a source ID may be replaced/substituted with a destination ID, or vice versa. For example, an L1 ID may be replaced/substituted with an L2 ID, or vice versa. For example, the L1 ID may be an L1 source ID or an L1 destination ID. For example, the L2 ID may be an L2 source ID or an L2 destination ID.

Meanwhile, in the present disclosure, for example, operation(s) of a TX UE to reserve/select/determine retransmission resource(s) may include operation(s) of the TX UE to reserve/select/determine potential retransmission resource(s) in which actual use is determined based on SL HARQ feedback information received from RX UE(s).

Meanwhile, in the present disclosure, a sub-selection window may be replaced/substituted with a selection window and/or a pre-configured number of resource sets within the selection window, or vice versa.

Meanwhile, in the present disclosure, SL MODE 1 may refer to a resource allocation method or a communication method in which a base station directly schedules SL transmission resource(s) for a TX UE through pre-defined signaling (e.g., DCI or RRC message). For example, SL MODE 2 may refer to a resource allocation method or a communication method in which a UE independently selects SL transmission resource(s) in a resource pool pre-configured or configured from a base station or a network. For example, a UE performing SL communication based on SL MODE 1 may be referred to as a MODE 1 UE or MODE 1 TX UE, and a UE performing SL communication based on SL MODE 2 may be referred to as a MODE 2 UE or MODE 2 TX UE.

Meanwhile, in the present disclosure, for example, a dynamic grant (DG) may be replaced/substituted with a configured grant (CG) and/or a semi-persistent scheduling (SPS) grant, or vice versa. For example, the DG may be replaced/substituted with a combination of the CG and the SPS grant, or vice versa. For example, the CG may include at least one of a configured grant (CG) type 1 and/or a configured grant (CG) type 2. For example, in the CG type 1, a grant may be provided by RRC signaling and may be stored as a configured grant. For example, in the CG type 2, a grant may be provided by a PDCCH, and may be stored or deleted as a configured grant based on L1 signaling indicating activation or deactivation of the grant. For example, in the CG type 1, a base station may allocate periodic resource(s) to a TX UE through an RRC message. For example, in the CG type 2, a base station may allocate periodic resource(s) to a TX UE through an RRC message, and the base station may dynamically activate or deactivate the periodic resource(s) through a DCI.

Meanwhile, in the present disclosure, a channel may be replaced/substituted with a signal, or vice versa. For example, transmission/reception of a channel may include transmission/reception of a signal. For example, transmission/reception of a signal may include transmission/reception of a channel. For example, cast may be replaced/substituted with at least one of unicast, groupcast, and/or broadcast, or vice versa. For example, a cast type may be replaced/substituted with at least one of unicast, groupcast, and/or broadcast, or vice versa. For example, the cast or the cast type may include unicast, groupcast and/or broadcast.

Meanwhile, in the present disclosure, a resource may be replaced/substituted with a slot or a symbol, or vice versa. For example, the resource may include a slot and/or a symbol.

Meanwhile, in the present disclosure, a priority may be replaced/substituted with at least one of logical channel prioritization (LCP), latency, reliability, minimum required communication range, prose per-packet priority (PPPP), sidelink radio bearer (SLRB), a QoS profile, a QoS parameter, and/or requirement, or vice versa.

Meanwhile, in the present disclosure, for example, for convenience of description, a (physical) channel used when a RX UE transmits at least one of the following information to a TX UE may be referred to as a PSFCH.

- SL HARQ feedback, SL CSI, SL (L1) RSRP

Meanwhile, in the present disclosure, a high priority may mean a small priority value, and a low priority may mean a large priority value. For example, Table 5 shows an example of priorities.

[Table 5]

| service or logical channel | priority value |
|---|---|
| service A or logical channel A | 1 |
| service B or logical channel B | 2 |
| service C or logical channel C | 3 |

Referring to Table 5, for example, service A or logical channel A related to the smallest priority value may have the highest priority. For example, service C or logical channel C related to the largest priority value may have the lowest priority.

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r_i" - T_3$, where $r_i"$ is the slot with the smallest slot index among $(r_0, r_1, r_2, ...)$ and $(r'_0, r'_1, r'_2, ...)$, and $T_3$ is equal to $T^{SL}_{proc,1}$. Herein, $T^{SL}_{proc,1}$ is the number of slots according to an SCS configuration of a SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter X for a given $prio_{TX}$ is defined as sl-TxPercentageList $(prio_{TX})$ converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ denotes the set of slots which belongs to the sidelink resource pool.

For example, the UE may select a set of candidate resources $(S_A)$ based on Table 6. For example, if resource (re)selection is triggered, the UE may select a set of candidate resources $(S_A)$ based on Table 6. For example, if re-evaluation or pre-emption is triggered, the UE may select a set of candidate resources $(S_A)$ based on Table 6.

[Table 6]

The following steps are used:

1) A candidate single-slot resource for transmission $R_{x,y}$ is defined as a set of $L_{subCH}$ contiguous sub-channels with sub-channel $x+j$ in slot $t'^{SL}_y$ where $j = 0,..., L_{subCH}$ - 1. The UE shall assume that any set of $L_{subCH}$ contiguous sub-channels included in the corresponding resource pool within the time interval [$n + T_1$, $n + T_2$] correspond to one candidate single-slot resource, where

- selection of $T_1$ is up to UE implementation under $0 \leq T_1 \leq T^{SL}_{proc,1}$ , where $T^{SL}_{proc,1}$ is defined in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i,p_j)$ is set to the corresponding value of RSRP threshold indicated by the i-th field in *sl-Thres-RSRP-List,* where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$ , and *'Resource reservation period'* field, if present, and *'Priority'* field in the received SCI format 1-A indicate the values $P_{rsvp\_RX}$ and *prio$_{RX}$,* respectively;

b) the RSRP measurement performed, for the received SCI format 1-A, is higher than $Th(prio_{RX},prio_{TX})$;

(continued)

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines the set of resource blocks and slots which overlaps with $R_{x,y+j \times P'_{rsvp\_TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of logical slots, $Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set ( $t'^{SL}_0, t'^{SL}_1, \ldots, t'^{SL}_{T'max-1}$ ), otherwise slot $t'^{SL}_{n'}$ is the first slot after slot $n$ belonging to the set ( $t'^{SL}_0, t'^{SL}_1, \ldots, t'^{SL}_{T'max-1}$ ); otherwise $Q$ = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set ($r_0$, $r_1$, $r_2$, ...) is not a member of $S_A$, then the UE shall report re-evaluation of the resource $r_i$ to higher layers.

If a resource $r'_i$ from the set ( $r'_0, r'_1, r'_2, \cdots$ ) meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:
    - sl-PreemptionEnable is provided and is equal to 'enabled' and $prio_{TX} > prio_{RX}$
    - sl-PreemptionEnable is provided and is not equal to 'enabled', and $prio_{RX} < prio_{pre}$ and $prio_{TX} > prio_{RX}$

Meanwhile, in order for power saving of the UE, partial sensing may be supported. For example, the partial sensing may be periodic-based partial sensing (PBPS) or contiguous partial sensing (CPS).

In various embodiments of the present disclosure, periodic-based partial sensing (PBPS) may refer to performing sensing, based on the number of periods corresponding to certain configured value(s), at the time corresponding to an integer multiple (k) of each of the periods when performing sensing for resource selection. For example, the periods may be periods of transmission resources configured in a resource pool. For example, resources at the time before the integer multiple k value of each of the periods from the time of candidate resources that are the subject of the resource conflict determination may be sensed. For example, the k value may be configured in the form of a bitmap.

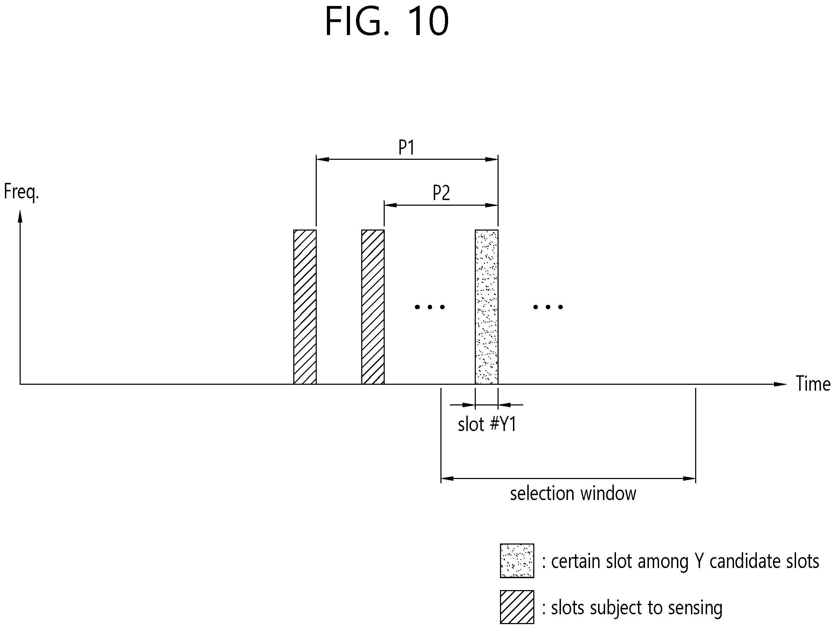

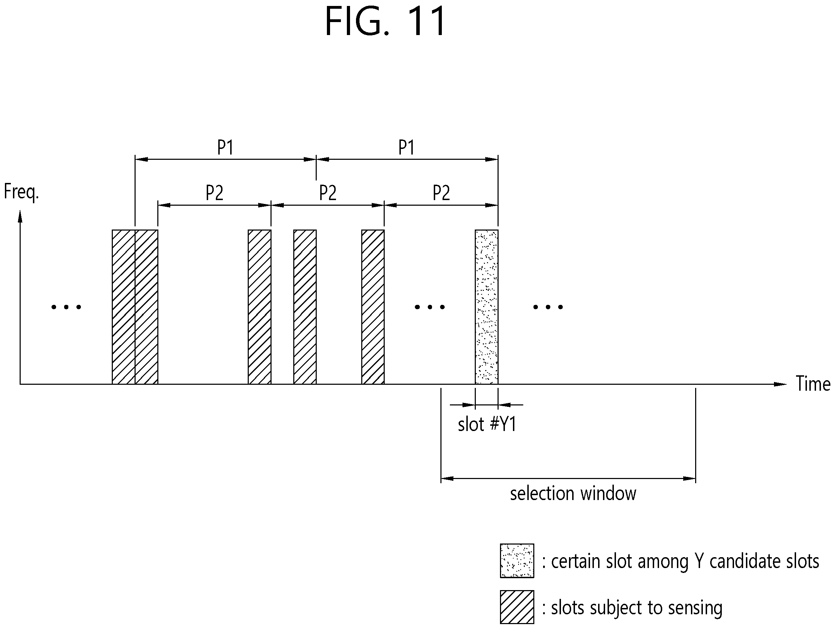

FIGs. 10 and 11 show a method for a UE to perform PBPS, based on an embodiment of the present disclosure. The embodiments of FIGs. 10 and 11 may be combined with various embodiments of the present disclosure.

In the embodiments of FIGs. 10 and 11, it is assumed that resource reservation periods allowed for a resource pool or resource reservation periods configured for PBPS are P1 and P2. Furthermore, it is assumed that the UE performs partial sensing (i.e., PBPS) to select SL resources within the slot #Y1.

Referring to FIG. 10, the UE may perform sensing for the slot located before P1 from the slot #Y1, and for the slot located before P2 from the slot #Y1.

Referring to FIG. 11, the UE may perform sensing for the slot located before P1 from the slot #Y1, and for the slot located before P2 from the slot #Y1. Furthermore, optionally, the UE may perform sensing for the slot located before A * P1 from the slot #Y1, and the slot located before B * P2 from the slot #Y1. For example, A and B may be positive integers greater than or equal to 2. Specifically, for example, the UE that selects the slot #Y1 as a candidate slot may perform sensing for the slot #(Y1 - resource reservation period*k), where k may be a bitmap. For example, if k is 10001, the UE that selects the slot #Y1 as a candidate slot may perform sensing for the slot #(Y1-P1*1), the slot #(Y1-P1*5), the slot #(Y1-P2*1), and the slot #(Y1-P2*5).

For example, in various embodiments of the present disclosure, continuous partial sensing (CPS) may refer to performing sensing for all or a part of a time domain given a certain configured value. For example, CPS may include a short-term sensing (STS) operation that performs sensing for a relatively short interval.

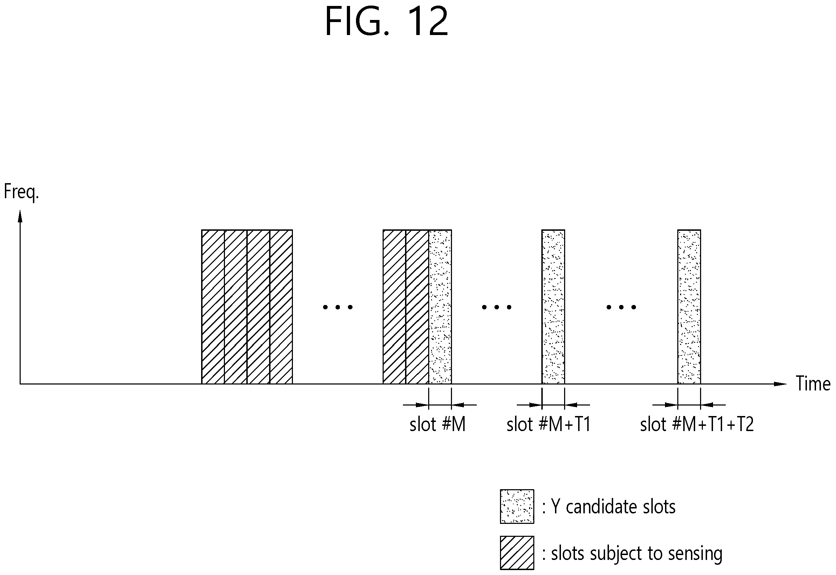

FIG. 12 shows a method for a UE to perform CPS, based on an embodiment of the present disclosure. The embodiment of FIG. 12 may be combined with various embodiments of the present disclosure.

In the embodiment of FIG. 12, it is assumed that Y candidate slots selected by the UE are the slot #M, the slot #(M+T1), and the slot #(M+T1+T2). In this case, slots for which the UE should perform sensing may be determined based on the first slot (i.e., slot #M) among the Y candidate slots. For example, after determining the first slot among the Y candidate slots as a reference slot, the UE may perform sensing for N slots (before) from the reference slot.

Referring to FIG. 12, based on the first slot (i.e., slot #M) among the Y candidate slots, the UE may perform sensing for N slots. For example, the UE may perform sensing for N slots before the slot #M, and the UE may select at least one SL resource within the Y candidate slots (i.e., slot #M, slot #(M+T1), and slot #(M+T1+T2)) based on the results of the sensing. For example, N may be configured or pre-configured for the UE. For example, there may be a time gap for processing between the slot #M and the last of the N slots.

Meanwhile, if the NACK ONLY feedback method (e.g., if the RX UE fails to decode a MAC PDU transmitted by the TX UE, the RX UE may feedback NACK information, and on the other hand, if the RX UE succeeds in decoding a MAC PDU, the RX UE may not transmit ACK information) is applied, a performance degradation problem may occur due to a HALF DUPLEX problem related to the reception of the MAC PDU (associated SCI) of the RX UE. For example, if the RX UE fails to receive data transmitted by the TX UE due to the HALF DUPLEX problem, the RX UE may not be able to transmit HARQ feedback to the TX UE. In this case, the TX UE that does not receive HARQ feedback from the RX UE may determine that the RX UE has successfully received the data, and the TX UE may not perform retransmission. As a result, the reliability of the SL communication may not be guaranteed.

Based on an embodiment of the present disclosure, when performing SL communication, if the NACK ONLY feedback method (e.g., if the RX UE fails to decode a MAC PDU transmitted by the TX UE, the RX UE may feedback NACK information, and on the other hand, if the RX UE succeeds in decoding a MAC PDU, the RX UE may not transmit ACK information) is applied, the following (some) rules may be applied to mitigate performance degradation due to the HALF DUPLEX problem related to the reception of the MAC PDU (associated SCI) of the RX UE.

For example, the TX UE may be configured to skip PSFCH (e.g., NACK information) monitoring related to (HARQ FEEDBACK ENABLED) MAC PDU transmission by a pre-configured (minimum or maximum or average) (allowed) number of times (SKIP_PFNUM). Herein, for example, if the rule is applied, the TX UE may (hypothetically) assume that NACK information has been received from the RX UE for the SKIP_PFNUM number of transmissions, and the TX UE may perform (additional) retransmission. For example, if the rule is applied, the TX UE may perform the SKIP_PFNUM number of transmissions in the form of blind retransmission, and in this regard, the TX UE may (hypothetically) assume that NACK information has been received from the RX UE, and the TX UE may perform (additional) retransmission. For example, the RX UE may be configured to skip the SKIP_PFNUM number of PSFCH transmissions related to the MAC PDU reception (in the above-described example situation).

For example, the (MODE 1) TX UE may be configured to transmit NACK information through a PUCCH related to PSSCH (and/or PSCCH) resources associated with (the SKIP_PFNUM number of) non-monitored PSFCHs (in the example situation described above). For example, the (MODE 1) TX UE may be configured to transmit ACK information through a PUCCH related to PSSCH (and/or PSCCH) resources associated with (the SKIP_PFNUM number of) non-monitored PSFCHs (in the example situation described above). For example, the (MODE 1) TX UE may be configured to transmit a pre-configured certain bit value through a PUCCH related to PSSCH (and/or PSCCH) resources associated with (the SKIP_PFNUM number of) non-monitored PSFCHs (in the example situation described above).

For example, the (MODE 1) TX UE may be configured to transmit NACK information through a PUCCH related to (the SKIP_PFNUM number of) PSSCH (and/or PSCCH) resources on which retransmission will be performed regardless of SL HARQ feedback information received from the RX UE (in the example situation described above). For example, the (MODE 1) TX UE may be configured to transmit ACK information through a PUCCH related to (the SKIP_PFNUM number of) PSSCH (and/or PSCCH) resources on which retransmission will be performed regardless of SL HARQ feedback information received from the RX UE (in the example situation described above). For example, the (MODE 1) TX UE may be configured to transmit a pre-configured certain bit value through a PUCCH related to (the SKIP_PFNUM number of) PSSCH (and/or PSCCH) resources on which retransmission will be performed regardless of SL HARQ feedback information received from the RX UE (in the example situation described above).

Based on an embodiment of the present disclosure, the following (some) rules may be applied to reduce power consumption due to PSFCH transmission by the POWER SAVING RX UE (and/or power consumption due to additional sensing operations related to re-evaluation/pre-emption check by the POWER SAVING TX UE).

For example, for some number of times (or a pre-configured (minimum or maximum or average) (allowed) number of times) (BD_TXNUM) related to (HARQ FEEDBACK ENABLED) MAC PDU transmission, the TX UE may be allowed/configured to set a HARQ feedback request field value on SCI to 0 (i.e., meaning not requesting SL HARQ feedback transmission to the RX UE). Herein, for example, if the rule is applied, the TX UE may perform retransmission by assuming (hypothetically) that NACK information has been received from the RX UE for the BD_TXNUM number of transmissions, and/or the TX UE may perform the BD_TXNUM number of transmissions in the form of blind retransmission. Furthermore, for example, for the remaining number of transmissions (related to the MAC PDU) other than the BD_TXNUM number of transmissions, the TX UE may set a HARQ feedback request field value on (related) SCI to 1 (i.e., meaning requesting SL HARQ feedback transmission to the RX UE). For example, the RX UE may be configured to skip the BD_TXNUM number of PSFCH transmissions related to the MAC PDU reception.

For example, the (MODE 1) TX UE may be configured to transmit NACK information through a PUCCH related to (the BD_TXNUM number of) PSSCH (and/or PSCCH) resources transmitted with the HARQ feedback request field value on SCI set to 0 (in the example situation described above). For example, the (MODE 1) TX UE may be configured to transmit ACK information through a PUCCH related to (the BD_TXNUM number of) PSSCH (and/or PSCCH) resources transmitted with the HARQ feedback request field value on SCI set to 0 (in the example situation described above). For example, the (MODE 1) TX UE may be configured to transmit a pre-configured certain bit value through a PUCCH related to (the BD_TXNUM number of) PSSCH (and/or PSCCH) resources transmitted with the HARQ feedback request field value on SCI set to 0 (in the example situation described above).

For example, the (MODE 1) TX UE may be configured to transmit NACK information through a PUCCH related to (the BD_TXNUM number of) PSSCH (and/or PSCCH) resources, performed in the form of blind retransmission (in the example situation described above). For example, the (MODE 1) TX UE may be configured to transmit ACK information through a PUCCH related to (the BD_TXNUM number of) PSSCH (and/or PSCCH) resources, performed in the form of blind retransmission (in the example situation described above). For example, the (MODE 1) TX UE may be configured to transmit a pre-configured certain bit value through a PUCCH related to (the BD_TXNUM number of) PSSCH (and/or PSCCH) resources, performed in the form of blind retransmission (in the example situation described above).

Based on an embodiment of the present disclosure, when SL pathloss based PSFCH transmit power control is applied between the TX UE(s) and the RX UE, the RX UE may be configured to determine transmit power values (and/or power spectral density (PSD) values) related to a plurality of PSFCH based on the following (some) rules.

For example, all PSFCH transmit power values (and/or PSD values) may be (finally) specified based on a maximum value among PSFCHs of different required power values (and/or required PSD values). For example, all PSFCH transmit power values (and/or PSD values) may be (finally) specified based on a minimum value among PSFCHs of different required power values (and/or required PSD values). For example, all PSFCH transmit power values (and/or PSD values) may be (finally) specified based on an average value of PSFCHs of different required power values (and/or required PSD values). For example, all PSFCH transmit power values (and/or PSD values) may be (finally) specified based on a PSFCH required power value (and/or required PSD value) related to the highest priority service among PSFCHs of different required power values (and/or required PSD values). For example, all PSFCH transmit power values (and/or PSD values) may be (finally) specified based on a PSFCH required power value (and/or required PSD value) related to the lowest priority service among PSFCHs of different required power values (and/or required PSD values). For example, all PSFCH transmit power values (and/or PSD values) may be (finally) specified based on a PSFCH required power value (and/or required PSD value) related to a NACK ONLY feedback method among PSFCHs of different required power values (and/or required PSD values). For example, all PSFCH transmit power values (and/or PSD values) may be (finally) specified based on a PSFCH required power value (and/or required PSD value) related to a pre-configured cast type (e.g., groupcast) among PSFCHs of different required power values (and/or required PSD values).

Based on an embodiment of the present disclosure, in order to perform packet transmission to the RX UE performing a SL DRX operation, the TX UE may be configured to perform resource selection based on the following (some) rules.

For example, the TX UE may (first) configure/determine a selection window (based on the REL-16 rule) based on a packet delay budget (PDB) related to a packet (to be transmitted), and then (limitedly) select (candidate) slots (from which transmission resources are selected) in a domain of the selection window that overlaps with an active time of the RX UE. For example, the TX UE may (limitedly) configure/determine a selection window (not exceeding a PDB related to a packet) in a domain overlapping an active time of the RX UE, and then select (candidate) slots (from which transmission resources are selected) within the selection window.

Based on an embodiment of the present disclosure, in the case of the POWE SAVING UE, the length of the additional sensing (e.g., STS) may be (pre-)configured to be longer than a PDB (related to a service of interest), and the UE may perform/terminate the STS operation based on the minimum value of its actual remaining PDB, the STS ending time, and the last resource selected.

Based on an embodiment of the present disclosure, the UE may first determine the selection window. Specifically, for example, the UE may first determine Y slots, and may consider an implementation such as SL DRX. Thereafter, the UE may configure, as a short-term sensing (STS) window, the selection window or a domain that can be covered by 32 slots for the Y slots.

For example, whether or not the above rule is applied (and/or the parameter value (e.g., SKIP_PFNUM, BD_TXNUM) related to the proposed method of the present disclosure) may be configured/allowed specifically (or differently or independently) (and/or the application of the above rule may be configured/allowed limitedly) based on at least one of the following elements/parameters (or for each of the following elements/parameters) comprising: a service type (and/or a (LCH or service) priority) and/or a QoS requirement (e.g., latency, reliability, minimum communication range) and/or a PQI parameter) (and/or HARQ FEEDBACK ENABLED (and/or DISABLED) LCH/MAC PDU (transmission) and/or a CBR measurement value of a resource pool and/or a SL cast type (e.g., unicast, groupcast, broadcast) and/or a SL groupcast HARQ feedback option (e.g., NACK ONLY feedback, ACK/NACK feedback, TX-RX distance-based NACK ONLY feedback) and/or a SL mode 1 CG type (e.g., SL CG type 1/2) and/or a SL mode type (e.g., mode 1/2) and/or a resource pool and/or whether a PSFCH resource is configured for a resource pool and/or whether periodic resource reservation operation (and/or aperiodic resource reservation operation) is allowed/configured (or not allowed/configured) for a resource pool and/or whether partial sensing operation (and/or random resource selection operation (and/or full sensing operation)) is allowed/configured (or not allowed/configured) for a resource pool and/or a source (L2) ID (and/or a destination (L2) ID) and/or a PC5 RRC connection link and/or a SL link and/or a connection state (with a base station) (e.g., RRC CONNECTED state, RRC IDLE state, RRC INACTIVE state) and/or a SL HARQ process (ID) and/or whether SL DRX operation (of a TX UE or an RX UE) is performed and/or whether it is a power saving (TX or RX) UE and/or a case where (from the perspective of a particular UE) PSFCH TX and PSFCH RX (and/or multiple PSFCH TXs (exceeding a UE capability)) overlap (and/or PSFCH TX (and/or PSFCH RX) is skipped) and/or a case where an RX UE actually (successfully) receives a PSCCH (and/or PSSCH) (re)transmission from a TX UE and/or a UE performing partial sensing (and/or random selection (without sensing) (and/or full sensing)) based resource selection and/or a UE performing a periodic (e.g., a plurality of MAC PDUs) (and/or aperiodic (e.g., single MAC PDU)) resource reservation operation and/or a UE performing periodic (and/or aperiodic) packet transmission and/or a case where the sensing operation is not performed before the resource (re)selection triggering time (and/or presence of the data on the buffer (or LCH))).

In the present disclosure, the term "configuration/being configured" (or "designation/being designated") may be extended to or interpreted as a form that the base station informs the UE through a pre-defined (physical layer or upper layer) channel/signal (e.g., SIB, RRC, MAC CE) (and/or a form provided through pre-configuration and/or a form that the UE informs another UE through a pre-defined (physical layer or upper layer) channel/signal (e.g., SL MAC CE, PC5 RRC)).

In addition, the term "PSFCH" in the present disclosure may be extended to or interpreted as "(NR or LTE) PSSCH (and/or (NR or LTE) PSCCH) (and/or (NR or LTE) SL SSB (and/or UL channel/signal))" (or vice versa).

In addition, the proposed methods of the present disclosure may be combined with each other and extended (in new forms).

In the present disclosure, the term "power saving and/or SL DRX" may be extended to or interpreted as partial sensing-based resource selection and/or random selection-based resource selection.

Based on various embodiments of the present disclosure, the TX UE can perform retransmission to the RX UE even when it fails to monitor PSFCH(s) from the RX UE. Through this, the reliability of SL communication between TX UE and RX UE can be improved.

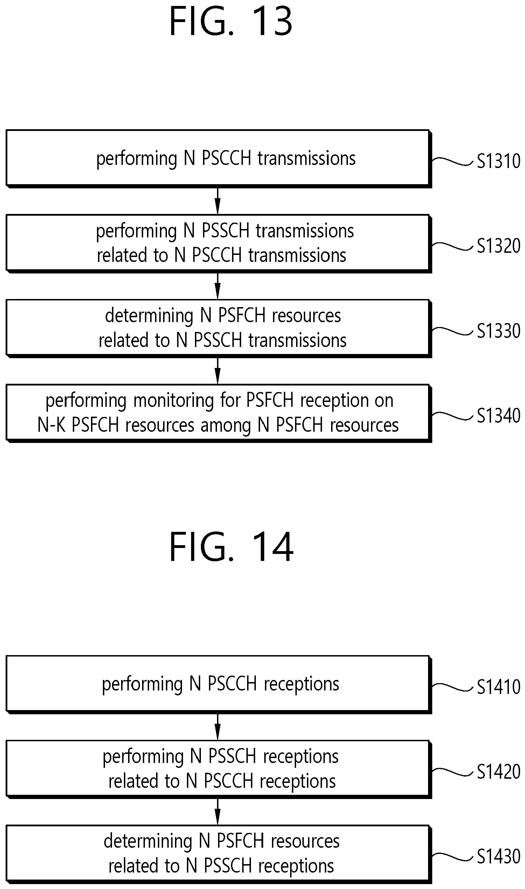

FIG. 13 shows a method for a first device to perform wireless communication, based on an embodiment of the present disclosure. The embodiment of FIG. 13 may be combined with various embodiments of the present disclosure.

Referring to FIG. 13, in step S1310, the first device may perform N physical sidelink control channel (PSCCH) transmissions. In step S1320, the first device may perform N physical sidelink shared channel (PSSCH) transmissions related to the N PSCCH transmissions. In step S1330, the first device may determine N physical sidelink feedback channel (PSFCH) resources related to the N PSSCH transmissions. In step S1340, the first device may perform monitoring for PSFCH reception on N-K PSFCH resources among the N PSFCH resources. For example, the monitoring for the PSFCH reception may be skipped on K PSFCH resources among the N PSFCH resources, and the N and the K may be positive integers.

Additionally, for example, the first device may determine that negative acknowledgment (NACK) is received on the K PSFCH resources, based on that the monitoring for the PSFCH reception is skipped on the K PSFCH resources. For example, based on that the monitoring for the PSFCH reception is skipped on the K PSFCH resources, K PSSCH retransmissions may be performed by the first device.

For example, based on that the monitoring for the PSFCH reception is skipped on the K PSFCH resources, K PSSCH blind retransmissions may be performed by the first device.

Additionally, for example, the first device may transmit, to a base station, NACK through at least one physical uplink control channel (PUCCH) related to the K PSFCH resources.

For example, the K may be a number of times the first device is allowed to skip the monitoring for the PSFCH reception, and information related to the K may be configured for the first device. For example, the first device may not be allowed to skip the monitoring for the PSFCH reception more than K times.

For example, the N PSCCH transmissions and the N PSSCH transmissions may be transmissions that require only NACK feedback.

For example, N media access control (MAC) protocol data units (PDUs) with hybrid automatic repeat request (HARQ) feedback enabled may be transmitted through the N PSSCH transmissions, and among N SCIs related to the N MAC PDUs, L SCIs may include information set to HARQ feedback disabled, and among the N SCIs related to the N MAC PDUs, N-L SCIs may include information set to the HARQ feedback enabled, and the L may be a positive integer. For example, based on the L SCIs including the information set to the HARQ feedback disabled, L PSSCH blind retransmissions may be performed by the first device. For example, the L may be a number of times that the HARQ feedback for the MAC PDUs is able to be set disable, and information related to the L may be configured for the first device.

Additionally, for example, the first device may determine a selection window based on a packet delay budget (PDB). Additionally, for example, the first device may select at least one candidate slot within an active time of a second device within the selection window. Additionally, for example, the first device may select at least one sidelink (SL) resource within the at least one candidate slot.

Additionally, for example, the first device may determine a selection window within an active time of a second device based on a PDB. Additionally, for example, the first device may select at least one SL resource within the selection window.

The proposed method can be applied to devices based on various embodiments of the present disclosure. First, the processor 102 of the first device 100 may control the transceiver 106 to perform N physical sidelink control channel (PSCCH) transmissions. In addition, the processor 102 of the first device 100 may control the transceiver 106 to perform N physical sidelink shared channel (PSSCH) transmissions related to the N PSCCH transmissions. In addition, the processor 102 of the first device 100 may determine N physical sidelink feedback channel (PSFCH) resources related to the N PSSCH transmissions. In addition, the processor 102 of the first device 100 may control the transceiver 106 to perform monitoring for PSFCH reception on N-K PSFCH resources among the N PSFCH resources. For example, the monitoring for the PSFCH reception may be skipped on K PSFCH resources among the N PSFCH resources, and the N and the K may be positive integers.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: perform N physical sidelink control channel (PSCCH) transmissions; perform N physical sidelink shared channel (PSSCH) transmissions related to the N PSCCH transmissions; determine N physical sidelink feedback channel (PSFCH) resources related to the N PSSCH transmissions; and perform monitoring for PSFCH reception on N-K PSFCH resources among the N PSFCH resources. For example, the monitoring for the PSFCH reception may be skipped on K PSFCH resources among the N PSFCH resources, and the N and the K may be positive integers.

Based on an embodiment of the present disclosure, an apparatus adapted to control a first user equipment (UE) performing wireless communication may be provided. For example, the apparatus may comprise: one or more processors; and one or more memories operably connected to the one or more processors and storing instructions. For example, the one or more processors may execute the instructions to: perform N physical sidelink control channel (PSCCH) transmissions; perform N physical sidelink shared channel (PSSCH) transmissions related to the N PSCCH transmissions; determine N physical sidelink feedback channel (PSFCH) resources related to the N PSSCH transmissions; and perform monitoring for PSFCH reception on N-K PSFCH resources among the N PSFCH resources. For example, the monitoring for the PSFCH reception may be skipped on K PSFCH resources among the N PSFCH resources, and the N and the K may be positive integers.

Based on an embodiment of the present disclosure, a non-transitory computer-readable storage medium storing instructions may be provided. For example, the instructions, when executed, may cause a first device to: perform N physical sidelink control channel (PSCCH) transmissions; perform N physical sidelink shared channel (PSSCH) transmissions related to the N PSCCH transmissions; determine N physical sidelink feedback channel (PSFCH) resources related to the N PSSCH transmissions; and perform monitoring for PSFCH reception on N-K PSFCH resources among the N PSFCH resources. For example, the monitoring for the PSFCH reception may be skipped on K PSFCH resources among the N PSFCH resources, and the N and the K may be positive integers.

FIG. 14 shows a method for a second device to perform wireless communication, based on an embodiment of the present disclosure. The embodiment of FIG. 14 may be combined with various embodiments of the present disclosure.

Referring to FIG. 14, in step S1410, the second device may perform N physical sidelink control channel (PSCCH) receptions. In step S1420, the second device may perform N physical sidelink shared channel (PSSCH) receptions related to the N PSCCH receptions. In step S 1430, the second device may determine N physical sidelink feedback channel (PSFCH) resources related to the N PSSCH receptions. For example, monitoring for PSFCH reception on N-K PSFCH resources among the N PSFCH resources may be performed by a first device, and monitoring for PSFCH reception on K PSFCH resources among the N PSFCH resources may be skipped by the first device, and the N and the K may be positive integers.

The proposed method can be applied to devices based on various embodiments of the present disclosure. First, the processor 202 of the second device 200 may control the transceiver 206 to perform N physical sidelink control channel (PSCCH) receptions. In addition, the processor 202 of the second device 200 may control the transceiver 206 to perform N physical sidelink shared channel (PSSCH) receptions related to the N PSCCH receptions. In addition, the processor 202 of the second device 200 may determine N physical sidelink feedback channel (PSFCH) resources related to the N PSSCH receptions. For example, monitoring for PSFCH reception on N-K PSFCH resources among the N PSFCH resources may be performed by a first device, and monitoring for PSFCH reception on K PSFCH resources among the N PSFCH resources may be skipped by the first device, and the N and the K may be positive integers.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: perform N physical sidelink control channel (PSCCH) receptions; perform N physical sidelink shared channel (PSSCH) receptions related to the N PSCCH receptions; and determine N physical sidelink feedback channel (PSFCH) resources related to the N PSSCH receptions. For example, monitoring for PSFCH reception on N-K PSFCH resources among the N PSFCH resources may be performed by a first device, and monitoring for PSFCH reception on K PSFCH resources among the N PSFCH resources may be skipped by the first device, and the N and the K may be positive integers.

Based on an embodiment of the present disclosure, an apparatus adapted to control a second user equipment (UE) performing wireless communication may be provided. For example, the apparatus may comprise: one or more processors; and one or more memories operably connected to the one or more processors and storing instructions. For example, the one or more processors may execute the instructions to: perform N physical sidelink control channel (PSCCH) receptions; perform N physical sidelink shared channel (PSSCH) receptions related to the N PSCCH receptions; and determine N physical sidelink feedback channel (PSFCH) resources related to the N PSSCH receptions. For example, monitoring for PSFCH reception on N-K PSFCH resources among the N PSFCH resources may be performed by a first UE, and monitoring for PSFCH reception on K PSFCH resources among the N PSFCH resources may be skipped by the first UE, and the N and the K may be positive integers.

Based on an embodiment of the present disclosure, a non-transitory computer-readable storage medium storing instructions may be provided. For example, the instructions, when executed, may cause a second device to: perform N physical sidelink control channel (PSCCH) receptions; perform N physical sidelink shared channel (PSSCH) receptions related to the N PSCCH receptions; and determine N physical sidelink feedback channel (PSFCH) resources related to the N PSSCH receptions. For example, monitoring for PSFCH reception on N-K PSFCH resources among the N PSFCH resources may be performed by a first device, and monitoring for PSFCH reception on K PSFCH resources among the N PSFCH resources may be skipped by the first device, and the N and the K may be positive integers.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

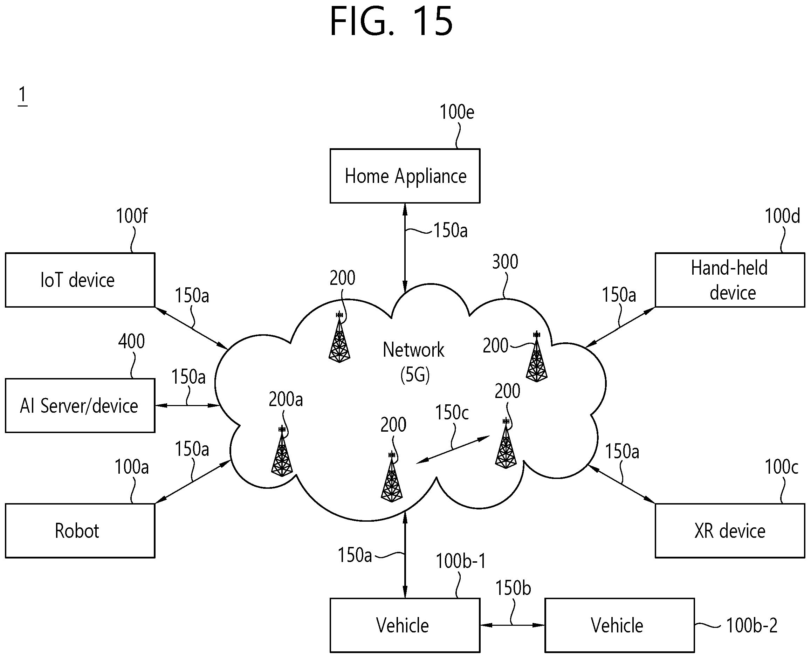

FIG. 15 shows a communication system 1, based on an embodiment of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100c, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

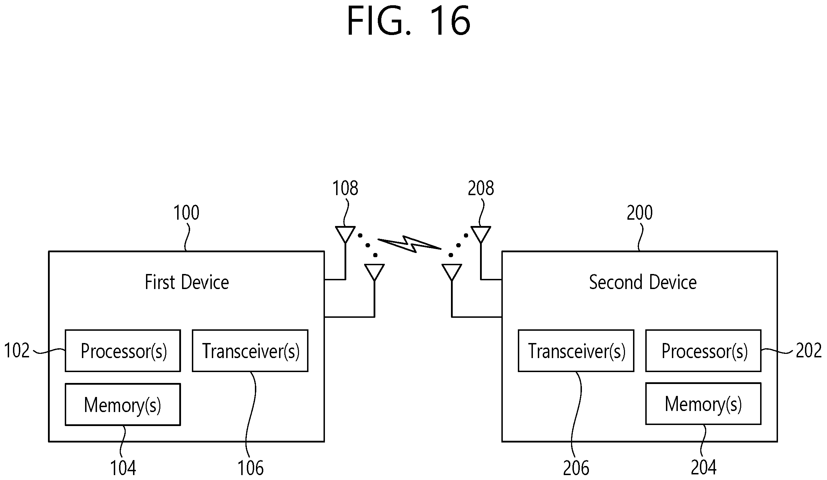

FIG. 16 shows wireless devices, based on an embodiment of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

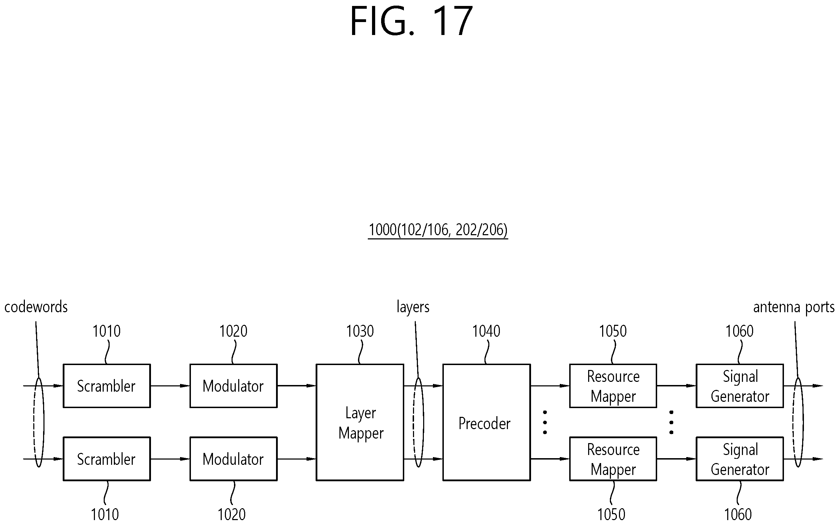

FIG. 17 shows a signal process circuit for a transmission signal, based on an embodiment of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

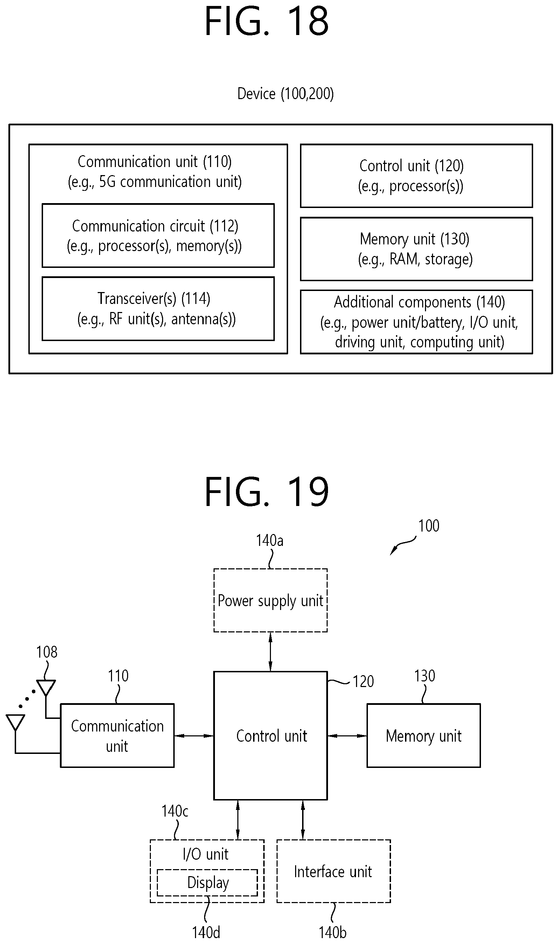

FIG. 18 shows another example of a wireless device, based on an embodiment of the present disclosure. The wireless device may be implemented in various forms according to a use-case/service (refer to FIG. 15).

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

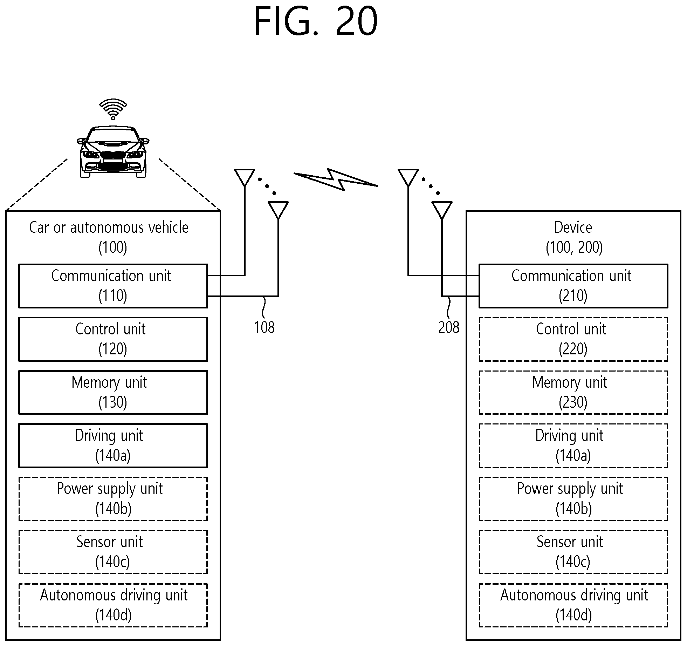

FIG. 20 shows a vehicle or an autonomous vehicle, based on an embodiment of the present disclosure. The

23

vehicle or autonomous vehicle may be implemented by a mobile robot, a car, a train, a manned/unmanned Aerial Vehicle (AV), a ship, etc.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

    performing N physical sidelink control channel (PSCCH) transmissions;
    performing N physical sidelink shared channel (PSSCH) transmissions related to the N PSCCH transmissions;
    determining N physical sidelink feedback channel (PSFCH) resources related to the N PSSCH transmissions; and
    performing monitoring for PSFCH reception on N-K PSFCH resources among the N PSFCH resources,
    wherein the monitoring for the PSFCH reception is skipped on K PSFCH resources among the N PSFCH resources, and
    wherein the N and the K are positive integers.

2. The method of claim 1, further comprising:
   determining that negative acknowledgment (NACK) is received on the K PSFCH resources, based on that the monitoring for the PSFCH reception is skipped on the K PSFCH resources.

3. The method of claim 2, wherein, based on that the monitoring for the PSFCH reception is skipped on the K PSFCH resources, K PSSCH retransmissions are performed by the first device.

4. The method of claim 1, wherein, based on that the monitoring for the PSFCH reception is skipped on the K PSFCH resources, K PSSCH blind retransmissions are performed by the first device.

5. The method of claim 1, further comprising:
transmitting, to a base station, NACK through at least one physical uplink control channel (PUCCH) related to the K PSFCH resources.

6. The method of claim 1, wherein the K is a number of times the first device is allowed to skip the monitoring for the PSFCH reception, and
wherein information related to the K is configured for the first device.

7. The method of claim 6, wherein the first device is not allowed to skip the monitoring for the PSFCH reception more than K times.

8. The method of claim 1, wherein the N PSCCH transmissions and the N PSSCH transmissions are transmissions that require only NACK feedback.

9. The method of claim 1, wherein N media access control (MAC) protocol data units (PDUs) with hybrid automatic repeat request (HARQ) feedback enabled are transmitted through the N PSSCH transmissions,

wherein, among N SCIs related to the N MAC PDUs, L SCIs include information set to HARQ feedback disabled,
wherein, among the N SCIs related to the N MAC PDUs, N-L SCIs include information set to the HARQ feedback enabled, and
wherein the L is a positive integer.

10. The method of claim 9, wherein, based on the L SCIs including the information set to the HARQ feedback disabled, L PSSCH blind retransmissions are performed by the first device.

11. The method of claim 9, wherein the L is a number of times that the HARQ feedback for the MAC PDUs is able to be set disable, and
wherein information related to the L is configured for the first device.

12. The method of claim 1, further comprising:

determining a selection window based on a packet delay budget (PDB);
selecting at least one candidate slot within an active time of a second device within the selection window; and
selecting at least one sidelink (SL) resource within the at least one candidate slot.

13. The method of claim 1, further comprising:

determining a selection window within an active time of a second device based on a PDB; and
selecting at least one SL resource within the selection window.

14. A first device adapted to perform wireless communication, the first device comprising:

one or more memories storing instructions;
one or more transceivers; and
one or more processors connected to the one or more memories and the one or more transceivers, wherein the one or more processors execute the instructions to:

perform N physical sidelink control channel (PSCCH) transmissions;
perform N physical sidelink shared channel (PSSCH) transmissions related to the N PSCCH transmissions;
determine N physical sidelink feedback channel (PSFCH) resources related to the N PSSCH transmissions; and
perform monitoring for PSFCH reception on N-K PSFCH resources among the N PSFCH resources,
wherein the monitoring for the PSFCH reception is skipped on K PSFCH resources among the N PSFCH resources, and

wherein the N and the K are positive integers.

15. An apparatus adapted to control a first user equipment (UE) performing wireless communication, the apparatus comprising:

one or more processors; and
one or more memories operably connected to the one or more processors and storing instructions, wherein the one or more processors execute the instructions to:

perform N physical sidelink control channel (PSCCH) transmissions;
perform N physical sidelink shared channel (PSSCH) transmissions related to the N PSCCH transmissions;
determine N physical sidelink feedback channel (PSFCH) resources related to the N PSSCH transmissions; and
perform monitoring for PSFCH reception on N-K PSFCH resources among the N PSFCH resources,
wherein the monitoring for the PSFCH reception is skipped on K PSFCH resources among the N PSFCH resources, and
wherein the N and the K are positive integers.

16. A non-transitory computer-readable storage medium storing instructions that, when executed, cause a first device to:

perform N physical sidelink control channel (PSCCH) transmissions;
perform N physical sidelink shared channel (PSSCH) transmissions related to the N PSCCH transmissions;
determine N physical sidelink feedback channel (PSFCH) resources related to the N PSSCH transmissions; and
perform monitoring for PSFCH reception on N-K PSFCH resources among the N PSFCH resources,
wherein the monitoring for the PSFCH reception is skipped on K PSFCH resources among the N PSFCH resources, and
wherein the N and the K are positive integers.

17. A method for performing wireless communication by a second device, the method comprising:

performing N physical sidelink control channel (PSCCH) receptions;
performing N physical sidelink shared channel (PSSCH) receptions related to the N PSCCH receptions; and
determining N physical sidelink feedback channel (PSFCH) resources related to the N PSSCH receptions,
wherein monitoring for PSFCH reception on N-K PSFCH resources among the N PSFCH resources is performed by a first device,
wherein monitoring for PSFCH reception on K PSFCH resources among the N PSFCH resources is skipped by the first device, and
wherein the N and the K are positive integers.

18. A second device adapted to perform wireless communication, the second device comprising:

one or more memories storing instructions;
one or more transceivers; and
one or more processors connected to the one or more memories and the one or more transceivers, wherein the one or more processors execute the instructions to:

perform N physical sidelink control channel (PSCCH) receptions;
perform N physical sidelink shared channel (PSSCH) receptions related to the N PSCCH receptions; and
determine N physical sidelink feedback channel (PSFCH) resources related to the N PSSCH receptions,
wherein monitoring for PSFCH reception on N-K PSFCH resources among the N PSFCH resources is performed by a first device,
wherein monitoring for PSFCH reception on K PSFCH resources among the N PSFCH resources is skipped by the first device, and
wherein the N and the K are positive integers.

19. An apparatus adapted to control a second user equipment (UE) performing wireless communication, the apparatus comprising:

one or more processors; and

one or more memories operably connected to the one or more processors and storing instructions, wherein the one or more processors execute the instructions to:

perform N physical sidelink control channel (PSCCH) receptions;

perform N physical sidelink shared channel (PSSCH) receptions related to the N PSCCH receptions; and

determine N physical sidelink feedback channel (PSFCH) resources related to the N PSSCH receptions, wherein monitoring for PSFCH reception on N-K PSFCH resources among the N PSFCH resources is performed by the first UE,

wherein monitoring for PSFCH reception on K PSFCH resources among the N PSFCH resources is skipped by the first UE, and

wherein the N and the K are positive integers.

20. A non-transitory computer-readable storage medium storing instructions that, when executed, cause a second device to:

perform N physical sidelink control channel (PSCCH) receptions;

perform N physical sidelink shared channel (PSSCH) receptions related to the N PSCCH receptions; and

determine N physical sidelink feedback channel (PSFCH) resources related to the N PSSCH receptions, wherein monitoring for PSFCH reception on N-K PSFCH resources among the N PSFCH resources is performed by a first device,

wherein monitoring for PSFCH reception on K PSFCH resources among the N PSFCH resources is skipped by the first device, and

wherein the N and the K are positive integers.

# FIG. 1

Evolution to 5G,
while maintaining backward compatibility

Advanced use cases
5G V2X R16

Enhanced safety
C-V2X R14/15

Higher throughput

Higher reliability

Wideband raging
and positioning

Lower latency

Basic safety
802.11p or C-V2X R14

Enhanced range and reliability

| Vehicle Platooning | Extended Sensors |
| Remote Driving | Advanced Driving |

# FIG. 2

# FIG. 3

EP 4 322 439 A1

**(a)**

UE

| SDAP |
| PDCP |
| RLC |
| MAC |
| PHY |

gNB

| SDAP |
| PDCP |
| RLC |
| MAC |
| PHY |

**(b)**

UE

| NAS |
| RRC |
| PDCP |
| RLC |
| MAC |
| PHY |

gNB

| RRC |
| PDCP |
| RLC |
| MAC |
| PHY |

AMF

| NAS |

**(c)**

UE A

| SDAP |
| PDCP |
| RLC |
| MAC |
| PHY |

UE B

| SDAP |
| PDCP |
| RLC |
| MAC |
| PHY |

PC5-U

**(d)**

UE A

| RRC |
| PDCP |
| RLC |
| MAC |
| PHY |

UE B

| RRC |
| PDCP |
| RLC |
| MAC |
| PHY |

PC5-C

# FIG. 4

# FIG. 5

# FIG. 6

PRB N3

$N^{size}_{BWP, 2}$

PRB 1

PRB 0

PRB N2

$N^{size}_{BWP, 1}$

PRB 1

PRB 0

PRB N1

$N^{size}_{BWP, 0}$

PRB 1

PRB 0

CRB 0

Carrier Bandwidth

$N^{start}_{BWP, 2}$

$N^{start}_{BWP, 1}$

$N^{start}_{BWP, 0}$

Freq.

Time

PRB 0 (Point A) in reference resource block

# FIG. 7

BS(e.g. eNB or gNB)

UE 1          UE 2

# FIG. 8

(a)

(b)

# FIG. 9

(a)

(b)

(c)

● : TX UE

⊘ : RX UE

# FIG. 10

Legend:
- ▨ : certain slot among Y candidate slots
- ▨ : slots subject to sensing

FIG. 11

# FIG. 12

slot #M     slot #M+T1     slot #M+T1+T2

: Y candidate slots

: slots subject to sensing

EP 4 322 439 A1

# FIG. 13

| performing N PSCCH transmissions | S1310 |

| performing N PSSCH transmissions related to N PSCCH transmissions | S1320 |

| determining N PSFCH resources related to N PSSCH transmissions | S1330 |

| performing monitoring for PSFCH reception on N-K PSFCH resources among N PSFCH resources | S1340 |

# FIG. 14

| performing N PSCCH receptions | S1410 |

| performing N PSSCH receptions related to N PSCCH receptions | S1420 |

| determining N PSFCH resources related to N PSSCH receptions | S1430 |

# FIG. 15

# FIG. 16

EP 4 322 439 A1

# FIG. 17

1000(102/106, 202/206)

# FIG. 18

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 19

100

140a

Power supply unit

108

110

Communication
unit

120

Control unit

130

Memory unit

140c

I/O unit

Display

Interface unit

140d

140b

# FIG. 20

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| | International application No. |
|---|---|
| | **PCT/KR2022/004969** |

**A. CLASSIFICATION OF SUBJECT MATTER**

**H04L 1/18**(2006.01)i; **H04L 5/00**(2006.01)i; **H04L 1/08**(2006.01)i; **H04W 4/40**(2018.01)i

According to International Patent Classification (IPC) or to both national classification and IPC

**B. FIELDS SEARCHED**

Minimum documentation searched (classification system followed by classification symbols)

H04L 1/18(2006.01); H04W 52/34(2009.01); H04W 72/02(2009.01); H04W 72/12(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PSCCH, PSSCH, PSFCH, 자원(resource), 모니터링(monitoring), 생략(skip)

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0143271 A (ELECTRONICS AND TELECOMMUNICATIONS RESEARCH INSTITUTE) 23 December 2020 (2020-12-23) See paragraphs [0084]-[0089]; claims 1 and 9; and figure 2. | 1-20 |
| A | KR 10-2020-0145212 A (SAMSUNG ELECTRONICS CO., LTD.) 30 December 2020 (2020-12-30) See paragraphs [0148]-[0158]; and figures 12-13. | 1-20 |
| A | US 2020-0344722 A1 (SAMSUNG ELECTRONICS CO., LTD.) 29 October 2020 (2020-10-29) See paragraphs [0405]-[0419]; and figures 36-37. | 1-20 |
| A | WO 2020-210333 A1 (IDAC HOLDINGS, INC.) 15 October 2020 (2020-10-15) See paragraphs [0187]-[0203]; and figure 8. | 1-20 |
| A | MODERATOR (OPPO). FL summary for AI 8.11.1.1-resource allocation for power saving. R1-2101412, 3GPP TSG RAN WG1 #104-e, e-Meeting. 05 February 2021. See pages 1-9. | 1-20 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 July 2022** | **11 July 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/004969**

| Patent document cited in search report | | | Publication date (day/month/year) | Patent family member(s) | | | Publication date (day/month/year) |
|---|---|---|---|---|---|---|---|
| KR | 10-2020-0143271 | A | 23 December 2020 | WO | 2020-251237 | A1 | 17 December 2020 |
| KR | 10-2020-0145212 | A | 30 December 2020 | EP | 3942725 | A1 | 26 January 2022 |
| | | | | US | 2020-0403737 | A1 | 24 December 2020 |
| | | | | WO | 2020-256509 | A1 | 24 December 2020 |
| US | 2020-0344722 | A1 | 29 October 2020 | CN | 113748628 | A | 03 December 2021 |
| | | | | EP | 3959837 | A1 | 02 March 2022 |
| | | | | KR | 10-2021-0145846 | A | 02 December 2021 |
| | | | | WO | 2020-218892 | A1 | 29 October 2020 |
| WO | 2020-210333 | A1 | 15 October 2020 | CN | 113678392 | A | 19 November 2021 |
| | | | | EP | 3954076 | A1 | 16 February 2022 |
| | | | | KR | 10-2022-0006043 | A | 14 January 2022 |
| | | | | TW | 202102032 | A | 01 January 2021 |

Form PCT/ISA/210 (patent family annex) (July 2019)